(19) Europäisches Patentamt
European Patent Office
Office européen des brevets

(11) EP 0 764 666 B1

(12) EUROPEAN PATENT SPECIFICATION

(45) Date of publication and mention of the grant of the patent:
**26.05.1999 Bulletin 1999/21**

(51) Int Cl.[6]: **C08F 212/04**, C08F 220/18, C08F 6/14, C09D 125/02, C09D 133/06

(21) Application number: **96114613.1**

(22) Date of filing: **12.09.1996**

(54) **Latex for coatings**

Latex für Überzugszusammensetzungen

Latex pour revêtements

(84) Designated Contracting States:
**BE DE ES FR GB IT NL SE**

(30) Priority: **21.09.1995 US 4234**

(43) Date of publication of application:
**26.03.1997 Bulletin 1997/13**

(73) Proprietor: **THE GOODYEAR TIRE & RUBBER COMPANY**
**Akron, Ohio 44316-0001 (US)**

(72) Inventors:
- **Burroway, Gary Lee**
  **Doylestown, Ohio 44230 (US)**
- **Riffle, Roger William**
  **Massillon, Ohio 44646 (US)**
- **Talley, Tracey Jay**
  **Atlanta, Georgia 30324 (US)**
- **Gesenhues, Albert Michael**
  **Elgin, Illinois 60120 (US)**

(74) Representative: **Leitz, Paul**
**Goodyear Technical Center-Luxembourg**
**Patent-Department**
**L-7750 Colmar-Berg (LU)**

(56) References cited:

| | |
|---|---|
| **EP-A- 0 501 272** | **US-A- 3 242 121** |
| **US-A- 4 474 926** | **US-A- 4 968 741** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 764 666 B1

Printed by Jouve, 75001 PARIS (FR)

## Description

### Background of the Invention

Most conventional coating resins are insoluble in water. Therefore, in general practice they have been dissolved in a suitable organic solvent or dispersed in water with the aid of an emulsifying agent or surfactant in order to provide a coating composition suitable for application to a substrate surface. A serious disadvantage of organic solvent solutions is that they are potentially toxic, flammable, and environmental pollutants. Water reducible coatings greatly reduce the magnitude of these problems. For this reason water based paints are currently being used as a replacement for oil based paints in many applications.

Various water reducible coating resins, such as the one described in U.S. Patent No. 4,474,926, have been developed. Water reducible coatings which utilize such resins have been developed for a variety of purposes and have been widely accepted in many applications such as highway striping paint.

United States Patent 4,968,741 describes a coating for metal substrates which provides improved corrosion and rust resistance. Such coatings are of the water reducible type and can be beneficially utilized in the automotive industry and other applications where good rust resistance is needed. For instance, such coatings are excellent for coating bridges and other outdoor metal structures. However, the water reducible coating compositions described in United States Patent 4,968,741 still contain a coalescing solvent, such as ethylene glycol n-butyl ether. Thus, they are not free of volatile organic compounds which evaporate into the atmosphere as the coating composition dries after being applied to the surface of the substrate being coated.

EP-A1-0 501 272 discloses a process for producing a neutralized latex that is useful in the manufacture of water-reducible coatings which comprises:

(1) free radical aqueous emulsion polymerizing, at a pH of less than about 3.5, a monomer mixture which comprises, based on 100 weight percent monomers: (a) from 30 to 70 weight percent vinyl aromatic monomers, (b) from 25 to 65 weight percent of at least one alkyl acrylate monomer, (c) from 1 to 5 weight percent of acrylic acid and (d) 0.4 to 3 weight percent methacrylic acid; in the presence of 0.2 to 0.4 phm at least one sulfonate surfactant and in the presence of 4 to 8 phm of at least one nonionic surface active agent having a hydrophile-lipophile balance number which is within the range of 12 to 20 to produce a latex; and
(2) neutralizing the latex with ammonia to a pH which is within the range of 7 to 10.5 to produce the neutralized latex.

From an environmental standpoint it would be highly desirable for water reducible coating formulations to contain virtually no volatile organic solvents, such as coalescing solvents. However, it is also critical for coatings made with such water reducible coating formulations to offer the desired combination of physical and chemical properties. For instance, in many applications it is important for the coating to exhibit excellent flexibility, excellent ultra-violet light resistance, and good water resistance. In applications which involve a metal substrate outstanding corrosion and rust resistance is normally also sought.

For purposes of this patent application, an aqueous coating system is considered to be a colloidal dispersion of a resin in water which can be reduced by the addition of water and which forms a durable coating when applied to a substrate surface. The term aqueous coating system is used herein interchangeably with the term water reducible coating. Other names which are sometimes applied to water reducible ; coatings are water born, water solubilized, and water dilutable.

### Summary of the Invention

This invention provides a water reducible coating composition as recited in the appended claims.

### Detailed Description of the Invention

The latices used in the practice of this invention are prepared by free radical emulsion polymerization. The charge compositions used in the preparation of these latices contain monomers, at least one phosphate ester surfactant, at least one water insoluble nonionic surface active agent and at least one free radical initiator. The monomer charge composition used in such polymerizations is comprised of (a) from 30 to 70 weight percent vinyl aromatic monomers, (b) from 25 to 65 weight percent of 2-ethylhexyl acrylate, (c) from 1 to 5 weight percent of acrylic acid, and (d) from 0.4 to 3 weight percent methacrylic acid. It is preferred for the polymer being synthesized to be comprised of from 40 to 60 weight percent vinyl aromatic monomers, from 35 to 55 weight percent 2-ethylhexyl acrylate, from 1 to 3 weight percent acrylic acid, and from 0.6 to 2 weight percent methacrylic acid. It is more preferred for the polymer to be comprised of from 47 weight percent to 57 weight percent vinyl aromatic monomers, from 40 to 50 weight percent

2-ethylhexyl acrylate, from 1.5 to 2.5 weight percent acrylic acid, and from 0.8 to 1.5 weight percent methacrylic acid.

Some representative examples of vinyl aromatic monomers which can be used include styrene, alpha-methyl styrene, and vinyl toluene. Styrene and alpha-methyl styrene are the preferred vinyl aromatic monomers. Due to its relatively low cost styrene is the most preferred vinyl aromatic monomer.

The charge composition used in the preparation of the latices employed in the practice of this invention will contain a substantial quantity of water. The ratio between the total amount of monomers present in the charge composition and water can range between 0.2:1 and 1.2:1. It is generally preferred for the ratio of monomers to water in the charge composition to be within the range of about 0.8:1 and about 1.1:1. For instance, it is very satisfactory to utilize a ratio of monomers to water in the charge composition of about 1:1.

The charge composition will also contain from 0.5 phm (parts per hundred parts of monomer) to 4.0 phm of at least one phosphate ester surfactant. It is normally preferred for the phosphate-ester surfactant to be present in the polymerization medium at a level within the range of 1 phm to 3.5 phm. It is generally more preferred for the charge composition to contain from 2 to 3 phm of the phosphate ester surfactant.

The phosphate ester surfactants that are useful in this invention are commercially available from a wide variety of sources. For instance, GAF Corporation sells phosphate ester surfactants under the tradename of Gafac™ RE-410, Gaftax™ CD-169, and Gaftax™ DP-100. Some other phosphate-ester surfactants that are commercially available include Indoil™ (BASF Wyandotte Corporation), Emphos™ (Witco Chemical Corporation), Cyclophos™ (Cyclochemicals Corporation), Tryfac™ (Emery Industries), and Alcamet™ (Lonza, Inc.).

The phosphate ester surfactants can have the structural formula:

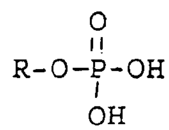

wherein R is an alkyl group or an aryl group. As a general rule, R will contain from 4 to 40 carbon atoms. It is preferred for such phosphate ester surfactants to be in the form of partially neutralized salts. Monobasic salts and nonionic compounds can be utilized as well as such dibasic salts. For example, Gafac™ RE-410, which is a preferred phosphate ester surfactant, is a complex mixture of (1) a dibasic salt having the structural formula:

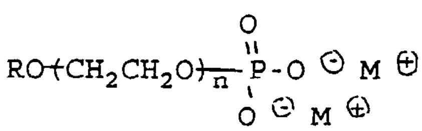

(2) a monobasic salt having the structural formula

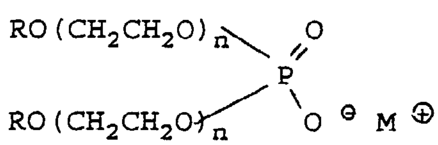

and (3) a nonionic compound having the structural formula:

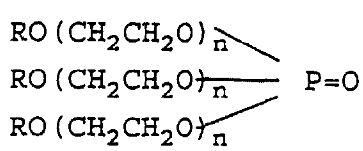

In the case of Gafac™ RE-410, n is 4, and R represents nonyl phenol.

The charge composition used in the preparation of such latices also contains from 0.5 phm to 4 phm of at least one water insoluble nonionic surface active agent. The water insoluble nonionic surface active agent will preferably be present in the polymerization medium at a level within the range of 1 phm to 3.5 phm and will more preferably be present in an amount ranging from 2 phm to 3 phm. The water insoluble nonionic surface active agent will normally be a fatty alcohol or a nonionic surfactant.

The fatty alcohols which can be utilized as the water insoluble nonionic surface active agent will typically be of the structural formula R-OH wherein R represents an alkyl group containing from 5 to 22 carbon atoms. In most cases, R will be an alkyl group containing from 10 to 18 carbon atoms. It is generally preferred for the fatty alcohol to contain from 12 to 14 carbon atoms. For instance, lauryl alcohol is a particularly preferred fatty alcohol.

The nonionic surfactants which can be utilized as the water insoluble nonionic surface active agent will normally have a hydrophile-lipophile balance (HLB) number of less than 12. It is generally preferred for such nonionic surfactants to have a HLB number of less than 10. HLB numbers are indicative of a surfactant's emulsification behavior and relate to the balance between the hydrophilic and lipophilic (hydrophobic) portions of the molecule. HLB numbers are further described in Griffin, W. C., J. Soc. Cosmet. Chem. 1, 311 (1949) which is incorporated herein by reference. The HLB number of a given surfactant generally decreases with increasing temperatures. The HLB numbers referred to herein are determined or calculated for the reaction temperature employed. Water insoluble nonionic surfactants which contain low levels (from 1 to 8) ethylene oxide repeat units can be employed. These water insoluble nonionic surfactants can have the structural formula:

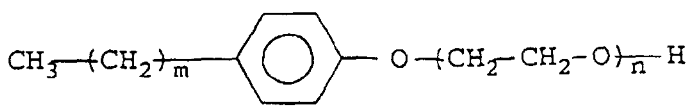

wherein n is an integer from 1 to 8 and wherein m is an integer from 6 to 12. It is normally preferred for m to be 8 or 9. The HLB number of such compounds increases with increasing levels of ethylene oxide incorporation. The HLB number of such compounds increases as a function of n as follows:

| n | HLB Number |
|---|---|
| 1 | 3.6 |
| 3 | 7.8 |
| 4 | 10.4 |
| 10 | 13.5 |
| 16 | 15.8 |
| 30 | 17.3 |
| 40 | 17.9 |

Polyols which are copolymers of ethylene oxide and propylene oxide can also be employed as the water insoluble nonionic surfactant. Such polyols have the structural formula:

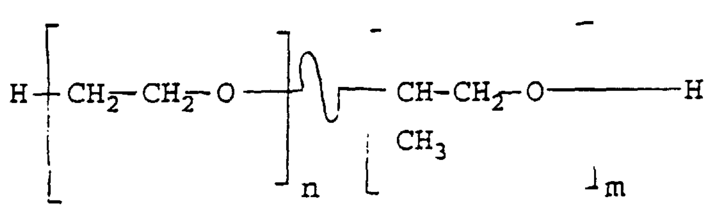

wherein n and m are integers, wherein the ratio of m to n is at least 5:1, and wherein 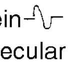 indicates that the distribution of monomeric units can be random. The polyols which can be used also have molecular weights of at least 1500. The polyols which are preferred contain less than 10% bound ethylene oxide (have a ratio of m to n of at least 10:1).

The use of larger amounts of phosphate ester surfactants in the polymerization medium leads to better latex stability. However, the utilization of larger amounts of phosphate ester surfactants also leads to greater blushing in the ultimate coating and consequently less rust and corrosion resistance. The utilization of greater amounts of the water insoluble nonionic surface active agent leads to less latex stability, but also results in less blushing and more water

resistance (less water permeability). Accordingly, it is important to balance the amounts of phosphate ester surfactant and fatty alcohol utilized in the charge composition.

The free radical aqueous emulsion polymerizations used in preparing the latices of this invention are initiated with at least one free radical generator. The free radical generator is normally employed at a concentration within the range of 0.01 phm to 1 phm. The free radical initiators which are commonly used include the various peroxygen compounds such as potassium persulfate, ammonium persulfate, benzoyl peroxide, hydrogen peroxide, di-t-butyl peroxide, dicumyl peroxide, 2,4-dichlorobenzoyl peroxide, decanoyl peroxide, lauryl peroxide, cumene hydroperoxide, p-menthane hydroperoxide, t-butyl hydroperoxide, acetyl peroxide, methyl ethyl ketone peroxide, succinic acid peroxide, dicetyl peroxydicarbonate, t-butyl peroxyacetate, t-butyl peroxymaleic acid, t-butyl peroxybenzoate, acetyl cyclohexyl sulfonyl peroxide, and the like; the various azo compounds such as 2-t-butylazo-2-cyanopropane, dimethyl azodiisobutyrate, azodiisobutyronitrile, 2-t-butylazo-1-cyanocyclohexane, l-t-amylazo-l-cyanocyclohexane, and the like, the various alkyl perketals, such as 2,2-bis-(t-butyl-peroxy)butane, and the like. Water soluble peroxygen free radical initiators are especially useful in such aqueous polymerizations.

The emulsion polymerizations utilized in the practice of this invention are typically carried out at the temperature ranging between 100°F (38°C) and 190°F (88°C). At temperatures above 190°F (88°C) 2-ethylhexyl acrylate monomer has a tendency to boil. Thus, a pressurized jacket would be required for heating the 2-ethylhexyl acrylate monomer to temperatures in excess of 88°C. On the other hand, the polymerization reaction proceeds at a very slow rate at temperatures below 100°F (38°C). The slow rate of polymerization experienced at temperatures below 100°F (38°C) results in the polymer having a nonuniform distribution of repeat units in its backbone. The slow rates of polymerization experienced at such low temperatures are also undesirable because they greatly reduce the throughput of the polymerization reactor.

It is generally preferred for the polymerization temperature to be maintained within the range of 110°F (43°C) to 185°F (85°C). It is generally more preferred for the reaction temperature to be controlled within the range of 120°F (49°C) to 175°F (79°C). In many cases it will be advantageous to increase the polymerization temperature as the reaction proceeds to drive the reaction to completion.

It is important for the polymerization to be conducted at a pH which is below 3.5 so that a water sensitive polymer is not produced. It is preferred for the pH of the polymerization medium to be maintained at a level of 3.0 or less throughout the polymerization. As the polymerization proceeds, the pH of the polymerization medium will drop naturally. Thus, good results can be attained by adjusting the pH of the initial monomer charge composition to within the range of 3.0 to 3.5 and allowing the polymerization to proceed. In such a case the final pH of the polymerization medium will be 1.5 which is highly satisfactory.

In commercial operations it is typically desirable to add 15% to 25% of the monomers in an initial charge. The initial charge is then allowed to react for a period of 30 minutes to 60 minutes. Then the balance of the monomers to be charged can be continuously charged into the reaction zone at a rate which is sufficient to maintain a reaction temperature within the desired temperature range. By continuously adding the monomers to the reaction medium while maintaining a relatively constant reaction temperature, very uniform polymers can be prepared.

In accordance with the process of this invention the latex synthesized is then neutralized with ammonia to a pH within the range of 7 to 10.5. It is normally preferred for the latex to be neutralized to a pH within the range of 8 to 10 and more preferred for the latex to be neutralized to a pH within the range of 9.0 to 9.5. This can be accomplished by simply dispersing ammonia throughout the latex to produce neutralized latex. The ammonia is normally in the form of ammonium hydroxide.

The latex formed can be diluted with additional water to the concentration (solids content) that is desired. This latex can be used in the preparation of water reducible coatings using techniques well-known to those skilled in the art. Generally, various pigments and plasticizers are added to the latex in the preparation of the water reducible coating. Poor adhesion is a problem that is sometimes encountered with water reducible resins. The adhesion of coatings made with water reducible resins to substrates can be greatly improved by the addition of a plasticizer. It is not necessary to include a coalescing solvent in the water reducible coating formulation. However, a small amount of coalescing solvent can be included to further improve properties, such as adhesion characteristics.

A film forming, water reducible composition, such as a paint, can be prepared by mixing the latex, one or more pigments and a plasticizer. It is not necessary to include a coalescing solvent in the film forming, water reducible formulation. For environmental reasons is it preferred not to include a coalescing solvent in the formulation. However, a small amount (0 to 50 grams per liter) of coalescing solvent can be included. In cases where a coalescing solvent is employed it is preferable for it to be at least water miscible and even more preferable for it to be water soluble. Of the various coalescing solvents which can be used, generally the ethylene glycol monobutyl ether, ethylene glycol monoethyl ether, diethylene glycol monomethyl ether, diethylene glycol monoethyl ether and diethylene glycol monobutyl ether are preferred.

It should be noted that the pigment, plasticizer, and optionally the coalescing solvent can be mixed directly with the resin in its water emulsion or latex form. This eliminates the need to recover the resin in its dry form. In such

an operation, the composite would automatically be in a water reduced form, when sufficient ammonia is used.

Paints formulations can be made utilizing the latices of this invention. Such paint formulations are comprised of one or more pigments and the latex (water, emulsifier system, and resin). Such paints can optionally contain fillers, plasticizers, stabilizers, defoamers, dryers, fungicides, insecticides, antifouling agents, and anticorrosive agents.

Pigments are normally added to paint formulations to impart color and hiding power to the coating. Titanium dioxide is an example of a widely used pigment which imparts hiding power and a white color. Mineral pigments, such as oxides of iron and chromium, organic pigments, such as phthalocyanine, and active anticorrosive pigments, such as zinc phosphate, are representative examples of other widely used pigments.

Fillers are normally inexpensive materials which are added to the paint formulation to attain the desired consistency and non-settling characteristics. Fillers can also improve a coating's physical properties, such as resistance to cracking and abrasion. Some representative examples of widely utilized fillers include chalks, clays, micas, forms of barites and talcs, and silica.

Driers are chemical compounds, such as salts of cobalt, lead, manganese, barium, and zinc, which speed up drying. Stabilizers are chemical agents which neutralize the destructive effects of heat and ultraviolet light. Fungicides and insecticides are commonly added to interior and exterior house paints. Antifouling compounds are commonly added to marine paints to inhibit marine growth. Plasticizers are agents which control the hardness of the film or which impart flexibility.

Of the various plasticizers, it is desired that one be selected which is liquid at room temperature such as 25°C and have a sufficiently high boiling point, preferably at least 100°C, and even more preferably, at least 150°C, so that they do not volatilize from the coating composition when applied to a substrate. Indeed, the plasticizer should enhance the water insolubility of a dried coating of the coalesced resin. Further, the plasticizer, or mixture of plasticizers, must be characterized by being compatible with the resin itself. For this characterization, a solubility parameter in the range of 8 to 16 is required. Such solubility parameter is of the type described in The Encyclopedia of Polymer Science and Technology, Volume 3, Page 854, 1965, John Wiley and Sons, Inc., which is simply determined by the equation

$$\sigma = (\Sigma F)/V = F/MW/d$$

where

$\sigma$ = solubility parameter
F = sum of the pertinent molar attraction constants of groups determined by Small, P A [(J Appl Chem 3, 71, (1953)]
V = Molar volume at 25°C
MW = molecular weight
d = density at 25°C

Various plasticizers can be used for this purpose. They can, for example, be of the type listed in the Federation Series on Coatings Technology, Unit Twenty-two, entitled "Plasticizers," published April, 1974, so long as they fulfill the melting point, boiling point and compatibility requirements.

Representative of various plasticizers are cyclic plasticizers such as phosphoric acid esters, phthalic anhydride esters and trimellitic acid esters as well as N-cyclohexyl-p-toluene sulfonamide, dibenzyl sebacate, diethylene glycol dibenzoate, di-t-octylphenylether, dipropane diol dibenzoate, N-ethyl-p-toluene sulfonamide, isopropylidenediphenoxypropanol, alkylated naphthalene, polyethylene glycol dibenzoate, o-p-toluene sulfonamide, trimethylpentanediol dibenzoate and trimethylpentanediol monoisobutyrate monobenzoate.

Representative of various acyclic plasticizers are adipic acid esters, azelaic acid esters, citric acid esters, acetylcitric acid esters, myristic acid esters, phosphoric acid esters, ricinoleic acid esters, acetylricinoleic acid esters, sebacic acid esters, stearic acid esters, epoxidized esters, as well as 1,4-butane diol dicaprylate, butoxyethyl pelargonate di[(butoxyethoxy)ethoxy] methane, dibutyl tartrate, diethylene glycol dipelargonate, diisooctyl diglycolate, isodecyl nonanoate, tetraethylene glycol di(2-ethylbutyrate), triethylene glycol di(2-ethyl-hexanoate), triethylene glycol dipelargonate and 2,2,4-trimethyl-1,3-pentane diol diisobutyrate.

Additional various plasticizers, cyclic, acyclic, and otherwise, include chlorinated paraffins, hydrogenated terphenyls, substituted phenols, propylene glycols, polypropylene glycol esters, polyethylene glycol esters, melamines, epoxidized soys, oils, melamines, liquid, hydrogenated abietate esters, epoxytallate esters, alkyl phthalyl alkyl glycolates, sulfonamides, sebacate esters, aromatic epoxies, aliphatic epoxies, liquid poly($\alpha$-methyl styrene), maleate esters, mellitate esters, benzoates, benzyl esters, tartrates, succinates, isophthalates, orthophthalates, butyrates, fumarates, glutarates, dicaprylates, dibenzoates and dibenzyl esters. It is to be appreciated that relatively low molecular weight polymers and copolymers derived from monoolefins containing 4 to 6 carbon atoms, mixtures of diolefins and monoolefins containing 4 to 6 carbon atoms as well as such hydrocarbons and hydrocarbon mixtures with styrene and/or α-methyl styrene can also be used.

The preferred esters are prepared from the reaction of carboxylic and dicarboxylic acids including fatty acids, such as the phthalic acids, benzoic acid, dibenzoic acid, adipic acid, sebacic acid, stearic acid, maleic acid, tartaric acid, succinic acid, butyric acid, fumaric acid and glutaric acid with hydrocarbon diols, preferably saturated hydrocarbon diols, having about 7 to 13 carbon atoms.

Representative of various phosphoric acid esters are cresyl diphenyl phosphate, tricresyl phosphate, dibutyl phenyl phosphate, diphenyl octyl phosphate, methyl diphenyl phosphate, tributyl phosphate, triphenyl phosphate, tri (2-butoxyethyl) phosphate, tri(2-chloroethyl) phosphate, tri-2(chloropropyl) phosphate and trioctyl phosphate.

Representative of various phthalic anhydride esters are butyl octyl phthalate, butyl 2-ethylhexyl phthalate, butyl n-octyl phthalate, dibutyl phthalate, diethyl phthalate, diisodecyl phthalate, dimethyl phthalate, dioctyl phthalates, di(2-ethylhexyl) phthalate, diisooctyl phthalate, di-tridecyl phthalate, n-hexyl n-decyl phthalate, n-octyl n-decyl phthalate, alkyl benzyl phthalate, bis(4-methyl-1,2-pentyl) phthalate, butyl benzyl phthalate, butyl cyclohexyl phthalate, di (2-butoxyethyl) phthalate, dicyclohexyl isodecyl phthalate, dicyclohexyl phthalate, diethyl isophthalate, di n-heptyl phthalate, dihexyl phthalate, diisononyl phthalate, di(2-methoxyethyl) phthalate, dimethyl isophthalate, dinonyl phthalate, dioctyl phthalates, dicapryl phthalate, di(2-ethylhexyl) isophthalate, mixed dioctyl phthalates, diphenyl phthalate, 2-(ethylhexyl) isobutyl phthalate, butyl phthalyl butyl glycolate, ethyl (and methyl) phthalyl ethyl glycolate, polypropylene glycol bis(amyl) phthalate, hexyl isodecyl phthalate, isodecyl tridecyl phthalate and isooctyl isodecyl phthalate.

Representative of trimellitic acid esters are triisooctyl trimellitate, tri-n-octyl n-decyl trimellitate, trioctyl trimellitate, tri(2-ethylhexyl) trimellitate, tri-n-hexyl n-decyl trimellitate, tri-n-hexyl trimellitate, triisodecyl trimellitate and triisononyl trimellitate.

Representative of various adipic acid esters are di[2-(2-butoxyethoxy) ethyl] adipate, di(2-ethylhexyl) adipate, diisodecyl adipate, dioctyl adipates (including diisooctyl adipate), n-hexyl n-decyl adipate, n-octyl n-decyl adipate, and di-n-heptyl adipate.

Representative examples of sebacic acid esters are dibutyl sebacate, di(2-ethylhexyl) sebacate, dibutoxyethyl sebacate, diisooctyl sebacate and diisopropyl sebacate.

Representative examples of azelaic acid esters are di(2-ethylhexyl) acelate dicyclohexyl acelate, diisobutyl azelate and diisooctyl azelate. In the practice of this invention, the water reducible composition of resin, plasticizer and coalescing solvent, if used, is water reduced by neutralizing the carboxyl groups of the resin with ammonia and mixing with water. The resulting dispersion or solution can generally be characterized by being stable without appreciable, if any, precipitation of the resin for a period of at least thirty (30) days and preferably for a period of at least 365 days or more at 25°C.

Generally, for the purpose of this invention 100 to 400 parts by weight water are used per 100 parts by weight neutralized resin, although more or less water can usually be used depending on whether a high or low viscosity dispersion or solution is desired or whether a high or low solids content is desired. It also depends on the type and amount of coalescing solvent (if any) and plasticizer used. The water reduced coating composition, as an aqueous dispersion or solution, is applied as a coating onto a suitable substrate such as wood, masonry, various plastics and various metals. The water, ammonia, and coalescing solvent are evaporated from the coating, usually at a temperature in the range of 20°C to 100°C, preferably 25°C to 50°C to leave a substantially water insoluble coating of the coalesced resin and plasticizer. Generally such a coating can be prepared and applied without the need for additional hardening agents or curatives to decrease the water sensitivity.

Therefore, it is an important feature of this invention that a durable coating is formed on a substrate through the preparation of a particular resin having balanced hydrophilic and hydrophobic elements, preferably with a further balance of hard and soft segments, and the formation of a water reduced composition of such resin with a combination of pigment and compatible plasticizer.

This invention is illustrated by the following examples which are merely for the purpose of illustration and are not to be regarded as limiting the scope of the invention or the manner in which it can be practiced. Unless specifically indicated otherwise, parts and percentages are given by weight.

<u>Example 1</u>

In this experiment, a latex was prepared in a ten gallon (37.8 liter) reactor using the technique of this invention. The reactor utilized in this experiment was equipped with axial flow turbine type agitation and was operated at 190 rpm (revolutions per minute). A buffer solution and a monomer solution were made for utilization in the polymerization. The buffer solution was made by mixing 17.0 kilograms of water with 340 grams of a 10% aqueous solution of phosphate ester surfactant which was neutralized with sodium hydroxide to a pH of 3.0, 340 grams of dodecanol, 40.8 grams of sodium acid pyrophosphate (electrolyte), 680 grams of Pliolite® 7104 (seed polymer latex), and 27.2 grams of ammonium persulfate. The monomer solution was prepared by mixing 7.07 kilograms of styrene, 13.6 grams of dodecylmercaptan, 6.12 kilograms of 2-ethylhexyl acrylate, 272 grams of acrylic acid and 136 grams of methacrylic acid.

After the reactor had been evacuated for 30 minutes, the buffer solution was charged into the reactor. Then 20 percent of the monomer solution was charged into the reactor. The reactor was heated to a temperature of 135°F (57°C) and the polymerization was allowed to proceed for 60 minutes. Then the remainder of the monomer solution was slowly added over a 3 hour period. After all of the monomer solution was added a solution containing 25 grams of a 28 percent aqueous solution of ammonia in 200 ml of water was added and the temperature was increased to 165°F (74°C).

Latex samples were taken as the polymerization proceeded to determine the solids content of the latex. The solids content of the latex increased during the course of polymerization as shown in Table I. After about 6 hours of polymerization time, when a solids content of about 43 percent was attained, 225 grams of a 28 percent aqueous solution of ammonia was added. After about 10 hours of polymerization time the level of residual styrene dropped to below 0.05 percent.

Table I

| Polymerization Time (Hours) | Solids Content |
|---|---|
| 0 | 0 |
| 1 | 16.1 |
| 2 | 24.1 |
| 4 | 33.0 |
| 6 | 42.7 |
| 8 | 46.1 |

The latex made utilizing this procedure had a final solids content of about 46%, a pH of about 8.2, a Brookfield viscosity of 170 centipoise (using a number 2 spindle at 20 rpm), and a residual styrene content of 0.043%.

The latex exhibited an excellent combination of properties for utilization in making coating formulations, such as paints, without including volatile organic compounds. In fact, coatings made with such coating formulations exhibited excellent adhesion to metal and excellent flexibility. Such coating formulations are particularly valuable for application to metals, wood, and concrete.

A water reducible coating formulation was made with the latex synthesized in this experiment. This was done by mixing 0.1 phr (parts per 100 parts of resin) of Surfynol® 104 wetting agent and 0.05 phr of Byk 020 defoamer into the latex. No volatile organic compounds were included in the coating formulation. Coatings made with this coating formulation proved to have excellent characteristics for coating wood including outstanding flexibility.

A water reducible coating formulation for coating metal substrates was also prepared. This was done by mixing 0.1 phr of Surfynol® 104 wetting agent, 0.05 phr of Byk 020 defoamer, and 2.5 phr of a 10% aqueous solution of ammonium benzoate into the latex. Again no volatile organic compounds were included in the coating formulation. Coatings made with this coating formulation exhibited excellent adhesion to metals and outstanding flexibility.

In general coating formulations can be made by simply mixing from 0.01 phr to 0.8 phr of a wetting agent and from 0.01 phr to 0.1 phr of a defoamer into the latex. Such water reducible coating formulations will preferably contain from 0.06 phr to 0.4 phr of a wetting agent and from 0.02 phr to 0.08 phr of a defomer. In cases where the coating formulation will be used to coat metal substrates it will also generally contain from 1 phr to 5 phr of a rust inhibiting agent, such as ammonium benzoate. The rust inhibiting agent will preferably be included at a level which is within the range of 2 phr to 3 phr.

Example 2

In this experiment the procedure described in Example 1 was employed except that the monomer solution contained 8.84 kg of styrene and 4.35 kg of 2-ethylhexyl acrylate. The latex made had a final solids content of about 45.5%, a pH of about 7.9, a Brookfield viscosity of 80 centipoise (using a number 2 spindle at 20 rpm), and a residual styrene content of 0.0%.

The latex synthesized in this experiment was used in making water reducible coating formulations. These coating formulations could be made without including volatile organic compounds and had excellent characteristics for coating wood, metal and concrete. The resulting coatings were harder than those made in Example 1 and exhibited a higher level of gloss.

Example 3

In this experiment, a latex was synthesized by utilizing a free radical emulsion polymerization technique wherein all of the monomers were initially charged. Such a procedure can be successfully implemented on a small scale basis but is not recommended for large scale operations. In the procedure employed a monomer mixture containing 52 parts of styrene, 45 parts of 2-ethylhexylacrylate, 2 parts of acrylic acid, and 1 part of methacrylic acid was polymerized using ammonium persulfate as a free radical generator in the presence of a phosphate ester surfactant (Gafac™ RE/410) and dodecanol. The pH of a 10% solution of the phosphate ester had been adjusted to 3.0 with sodium hydroxide prior to mixing with other ingredients. This adjustment determined the solubility of the soap and monomeric components and further determined the particle size of the resultant latex. The free radical polymerization reaction was initially carried out at a temperature of 125°F (52°C) with the temperature being raised after several hours of polymerization time to drive the reaction to completion. The finished latex was adjusted to a pH of 8.5 to 9.0 by the addition of ammonia to give enhanced latex stability. Films formed from the latex were soft, flexible and water resistant.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A water reducible coating composition which is characterized by being comprised of (1) water; (2) a resin having repeat units which are derived from (a) from 30 to 70 weight percent vinyl aromatic monomers, (b) from 25 to 65 weight percent of 2-ethylhexyl acrylate monomer, and (c) from 1 to 5 weight percent of acrylic acid, and (d) 0.4 to 3 weight percent methacrylic acid, based on 100 weight percent monomers; (3) a wetting agent; (4) a defoamer; (5) a phosphate ester surfactant; and (6) a nonionic surfactant having a hydrophile-lipophile balance number of less than 12.

2. A water-reducible coating composition as specified in claim 1 characterized in that the vinyl aromatic monomer is selected from the group consisting of styrene, $\alpha$-methyl styrene, and vinyl toluene.

3. A water-reducible coating composition as specified in claim 1 or 2 characterized in that the resin is derived from 40 to 60 weight percent vinyl aromatic monomers, from 35 to 55 weight percent 2-ethylhexyl acrylate, from 1 to 3 weight percent of acrylic acid, and from 0.6 to 2 weight percent methacrylic acid.

4. A water-reducible coating composition as specified in claim 1, 2 or 3 characterized in that the resin is derived from 47 to 57 weight percent styrene, from 40 to 50 weight percent 2-ethylhexyl acrylate, from 1.5 to 2.5 weight percent of acrylic acid, and from 0.8 to 1.5 weight percent methacrylic acid.

5. A water reducible coating composition as specified in any of the preceding claims which is characterized by being further comprised of one or more pigments.

## Patentansprüche

1. Wasser-verdünnbare Beschichtungszusammensetzung, welche dadurch gekennzeichnet ist, daß sie umfaßt (1) Wasser; (2) ein Harz mit wiederkehrenden Einheiten, welche abgeleitet sind von (a) 30 bis 70 Gew.-% Vinyl-aromatischen Monomeren, (b) 25 bis 65 Gew.-% 2-Ethylhexylacrylat-Monomer und (c) 1 bis 5 Gew.-% Acrylsäure und (d) 0,4 bis 3 Gew.-% Methacrylsäure bezogen auf 100 Gewichtsteile Monomere; (3) ein Netzmittel; (4) ein Entschäumungsmittel; (5) ein Phosphatester-Tensid; und (6) ein nichtionisches Tensid mit einem HLB-Wert von weniger als 12.

2. Wasser-verdünnbare Beschichtungszusammensetzung nach Anspruch 1, dadurch gekennzeichnet, daß das Vinyl-aromatische Monomer ausgewählt ist aus der Gruppe bestehend aus Styrol, $\alpha$-Methylstyrol und Vinyltoluol.

3. Wasser-verdünnbare Beschichtungszusammensetzung nach Anspruch 1 oder 2, dadurch gekennzeichnet, daß das Harz abgeleitet ist von 40 bis 60 Gew.-% Vinyl-aromatischen Monomeren, 35 bis 55 Gew.-% 2-Ethylhexylacrylat, 1 bis 3 Gew.-% Acrylsäure, und 0,6 bis 2 Gew.-% Methacrylsäure.

4. Wasser-verdünnbare Beschichtungszusammensetzung nach Anspruch 1, 2 oder 3, dadurch gekennzeichnet, daß das Harz abgeleitet ist von 47 bis 57 Gew.-% Styrol, 40 bis 50 Gew.-% 2-Ethylhexylacrylat, 1,5 bis 2,5 Gew.-% Acrylsäure und 0,8 bis 1,5 Gew.-% Methacrylsäure.

5. Wasser-verdünnbare Beschichtungszusammensetzung nach irgendeinem der vorhergehenden Ansprüche, welche dadurch gekennzeichnet ist, daß sie weiter eines oder mehrere Pigmente umfaßt.

**Revendications**

1. Composition d'enduction réductible à l'eau qui est caractérisée par le fait qu'elle comprend (1) de l'eau; (2) une résine possédant des unités structurales qui dérivent de: (a) à concurrence de 30 à 70 pour cent en poids, des monomères vinylaromatiques; (b) à concurrence de 25 à 65 pour cent en poids, un monomère d'acrylate de 2-éthylhexyle; et c) à concurrence de 1 à 5 pour cent en poids, de l'acide acrylique; et (d) à concurrence de 0,4 à 3 pour cent en poids, de l'acide méthacrylique; basés sur 100 pour cent en poids des monomères; (3) un agent mouillant; (4) un agent anti-mousse; (5) un ester de type phosphate utilisé à titre d'agent tensio-actif; et (6) un agent tensioactif non ionique possédant un indice d'équilibre hydrophile-lipophile inférieur à 12.

2. Composition d'enduction réductible à l'eau telle que spécifiée à la revendication 1, caractérisée en ce que le monomère vinylaromatique est choisi parmi le groupe constitué par le styrène, l'a-méthylstyrène et le vinyltoluène.

3. Composition d'enduction réductible à l'eau telle que spécifiée à la revendication 1 ou 2, caractérisée en ce que la résine dérive: à concurrence de 40 à 60 pour cent en poids, de monomères vinylaromatiques; à concurrence de 35 à 55 pour cent en poids, d'acrylate de 2-éthylhexyle; à concurrence de 1 à 3 pour cent en poids, d'acide acrylique; et, à concurrence de 0,6 à 2 pour cent en poids, d'acide méthacrylique.

4. Composition d'enduction réductible à l'eau telle que spécifiée à la revendication 1, 2 ou 3, caractérisée en ce que la résine dérive: à concurrence de 47 à 57 pour cent en poids, du styrène; à concurrence de 40 à 50 pour cent en poids, d'acrylate de 2-éthylhexyle; à concurrence de 1,5 à 2,5 pour cent en poids, d'acide acrylique; et, à concurrence de 0,8 à 1,5 pour cent en poids, d'acide méthacrylique.

5. Composition d'enduction réductible à l'eau telle que spécifiée dans l'une quelconque des revendications précédentes, qui est caractérisée par le fait qu'elle comprend en outre un ou plusieurs pigments.